Europäisches Patentamt

European Patent Office

Office européen des brevets

(11) Publication number:

**0 054 238**
**B1**

(12) **EUROPEAN PATENT SPECIFICATION**

(45) Date of publication of patent specification: **02.04.86**

(21) Application number: **81110144.3**

(22) Date of filing: **04.12.81**

(51) Int. Cl.⁴: **G 21 C 7/26**

(54) Spectral shift reactor.

(30) Priority: **16.12.80 US 217053**

(43) Date of publication of application:
**23.06.82 Bulletin 82/25**

(45) Publication of the grant of the patent:
**02.04.86 Bulletin 86/14**

(84) Designated Contracting States:
**AT BE CH DE LI SE**

(56) References cited:
**FR-A-1 330 824**
**FR-A-2 399 715**
**GB-A- 865 226**
**US-A-3 036 964**
**US-A-3 205 144**
**US-A-3 775 246**
**US-A-4 092 216**

(73) Proprietor: **WESTINGHOUSE ELECTRIC CORPORATION**
**Westinghouse Building Gateway Center**
**Pittsburgh Pennsylvania 15222 (US)**

(72) Inventor: **Sherwood, Donald Guyer**
**249 Lilac Drive**
**Monroeville Pennsylvania (US)**
Inventor: **Wilson, John Francis**
**3560 Meadowgate Drive**
**Murrysville Pennsylvania (US)**
Inventor: **Salton, Robert Byron**
**320 Tahoe Drive**
**Pittsburgh Pennsylvania (US)**
Inventor: **Fensterer, Howard Frank**
**25 Apennine Road**
**Pittsburg Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

The invention relates to spectral shift reactor control and more particularly to mechanical means for spectral shift reactor control.

In typical nuclear reactors, reactivity control is accomplished by varying the amount of neutron absorbing material (poisons) in the reactor core. Generally, neutron absorbing control rods are utilized to perform this function by varying the number and location of the control rods with respect to the reactor core. In addition to control rods, burnable poisons and poisons dissolved in the reactor coolant can be used to control reactivity.

In the conventional designs of pressurized water reactors, an excessive amount of reactivity is designed into the reactor core at start-up so that as the reactivity is depleted over the life of the core the excess reactivity may be employed to lengthen the core life. Since an excessive amount of reactivity is designed into the reactor core at the beginning of core life, neutron absorbing material such as soluble boron must be placed in the core at that time in order to properly control the excess reactivity. Over the core life, as reactivity is consumed, the neutron absorbing material is gradually removed from the reactor core. The neutron absorbing material absorbs neutrons and removes reactivity from the reactor core which could otherwise be used in a more productive manner such as in plutonium fuel production. The consumption of reactivity in this manner without producing a useful product results in a less efficient depletion of uranium and greater fuel costs than could otherwise be achieved.

A method of providing for an extended core life while reducing the amount of neutron absorbing material in a heavy water nuclear reactor core is by the use of "Spectral Shift Control". In that case the reduction of excess reactivity (and thus neutron absorbing material) is achieved by replacing a large portion of the heavy water reactor coolant with ordinary water. This retards the chain reaction by shifting the neutron spectrum to higher energies and permits the reactor to operate at full power with a reduced amount of neutron absorbing material. This shift in the neutron spectrum to a "hardened" spectrum also causes more of the $U^{238}$ to be converted to plutonium that is eventually used to produce heat. Thus, the shift from a "soft" to a "harder" spectrum results in more neutrons being consumed by $U^{238}$ in a useful manner rather than by poisons. As reactivity is consumed, the ordinary water is gradually replaced with heavy water so that the reactor core reactivity is maintained at a proper level. By the end of core life, essentially all the ordinary water has been replaced by heavy water while the core reactivity has been maintained. Thus, the reactor can be controlled without the use of neutron absorbing material and without the use of excess reactivity at start-up which results in a significant uranium fuel cost savings. The additional plutonium production also reduces the $U^{238}$ enrichment requirements.

While there exists in the prior art numerous ways of controlling a nuclear reactor, what is needed is apparatus for controlling reactor core moderation in a manner that provides for reduced uranium fuel costs and for an extended reactor core life.

In a spectral shift reactor water displacer elements may be provided which may be withdrawn from the reactor core for selectively changing the water-moderator volume in the core thereby changing the reactivity of the core.

It is the principal object of the present invention to provide a spectral shift pressurized water reactor with such water displacer elements for insertion into or withdrawal from the core, which is relatively simple but provides for efficient and effective reactor control.

With this object in view, the present invention resides in a spectral shift pressurized water nuclear reactor including a reactor vessel having an inlet and an outlet for circulating a water coolant therethrough and having a closure head disposed on top thereof, and a nuclear core enclosed therein, said core comprising fuel assemblies, having a plurality of water displacer elements slidably disposed therein, drive means mounted on said closure head and connected to said displacer elements, and guide means disposed in said reactor vessel above said fuel assemblies for receiving and guiding said displacer elements through the upper portion of said reactor vessel, said displacer elements being attached to a spider for moving said displacer elements simultaneously, and a drive shaft attached to said spider and extending through said closure head, and connected to said drive means for inserting and withdrawing said displacer elements from said fuel asssemblies, and comprising the combination of (1) chemical shim capabilities; (2) a plurality of high neutron absorbing control rods arranged to be inserted into or withdrawn from the reactor core for load follow and reactor core power distribution; and (3) said water displacer elements being arranged to be inserted into or withdrawn from the core for controlling the amount of water in said core, the combined volume of said displacer elements being substantially larger than the combined volume of said neutron absorbing control rods so as to generate a substantially larger shift to a fast neutron spectrum by insertion into the core of said water displacer elements than is generated by the insertion of said control rods.

The invention will become more readily apparent from the following description of a preferred embodiment thereof shown, by way of example only, in the accompanying drawings, wherein:

Figure 1 is a cross-sectional view in elevation of the reactor vessel;

Figure 2 is a cross-sectional view in elevation of the top portion of the fuel assembly;

Figure 3 is a cross-sectional view in elevation of the bottom portion of the fuel assembly;

Figure 4 is a view in perspective of displacer rods and their respective fuel assembly;

Figure 5 is a cross-sectional view in elevation of a displacer rod guide structure;

Figure 6 is a view along line VI—VI of Figure 5;

Figure 7 is a diagram of a quarter core of the reactor;

Figure 8 is an enlarged view of a portion of the quarter core;

Figure 9 is an enlarged view of a portion of the quarter core;

Figure 10 is a cross-sectional diagram of a typical fuel assembly; and

Figure 11 is a diagram of a section of the core.

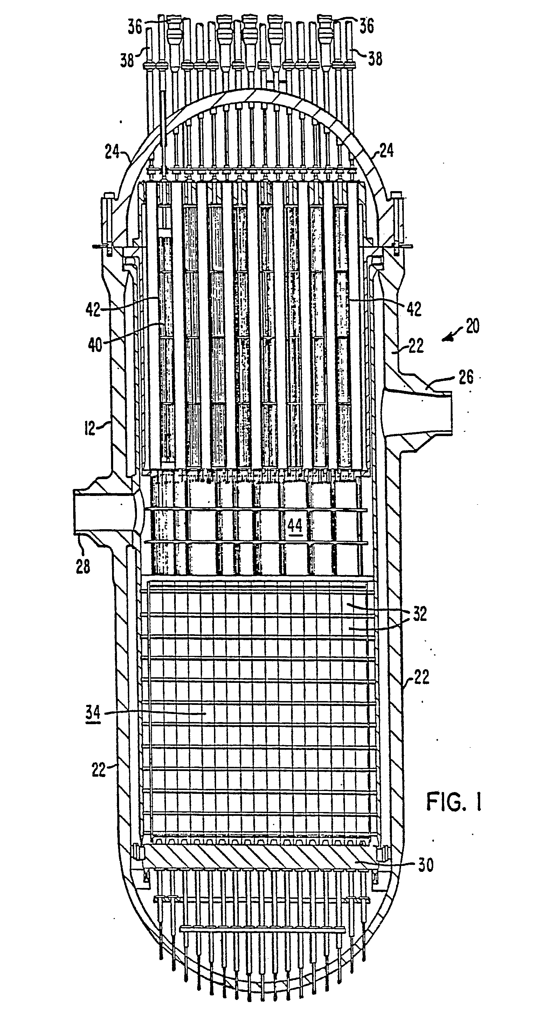

Referring to Figure 1, the nuclear reactor is referred to generally as 20 and comprises a reactor vessel 22 with a removable closure head 24 attached to the top end thereof. An inlet nozzle 26 and an outlet nozzle 28 are connected to reactor vessel 22 to allow a coolant such as water to circulate through reactor vessel 22. A core plate 30 is disposed in the lower portion of reactor vessel 22 and serves to support fuel assemblies 32. Fuel assemblies 32 are arranged in reactor vessel 22 and comprise reactor core 34. As is well understood in the art, fuel assemblies 32 generate heat by nuclear fissioning of the uranium therein. The reactor coolant flowing through reactor vessel 22 in heat transfer relationship with fuel assemblies 32 transfers the heat from fuel assemblies 32 to electrical generating equipment located remote from nuclear reactor 20. A plurality of control rod drive mechanisms 36 which may be chosen from those well-known in the art are disposed on closure head 24 for inserting or withdrawing control rods (not shown) from fuel assemblies 32. In addition, a plurality of displacer rod drive mechanisms 38 are also disposed on closure head 24 for inserting or withdrawing displacer rods 40 from fuel assemblies 32. For purpose of clarity, only a selected number of displacer rods 40 are shown in Figure 1. However, it should be understood, that the number of displacer rods 40 are chosen to correspond to the number of displacer rod guide tubes in fuel assemblies 32. A plurality of displacer rod guide structures 42 are located in the upper section of reactor vessel 22 with each being in alignment with a displacer rod drive mechanism 38 for guiding the movement of displacer rods 40 through the upper section of reactor vessel 22. A calandria 44 may be arranged between fuel assemblies 32 and displacer rod guide structures 42 and comprises a multiplicity of hollow stainless steel tubes arranged in colinear alignment with each displacer rod and control rod for providing guidance of the displacer rods and control rods through the calandria area and for minimizing flow induced vibrations in the displaced rods and control rods.

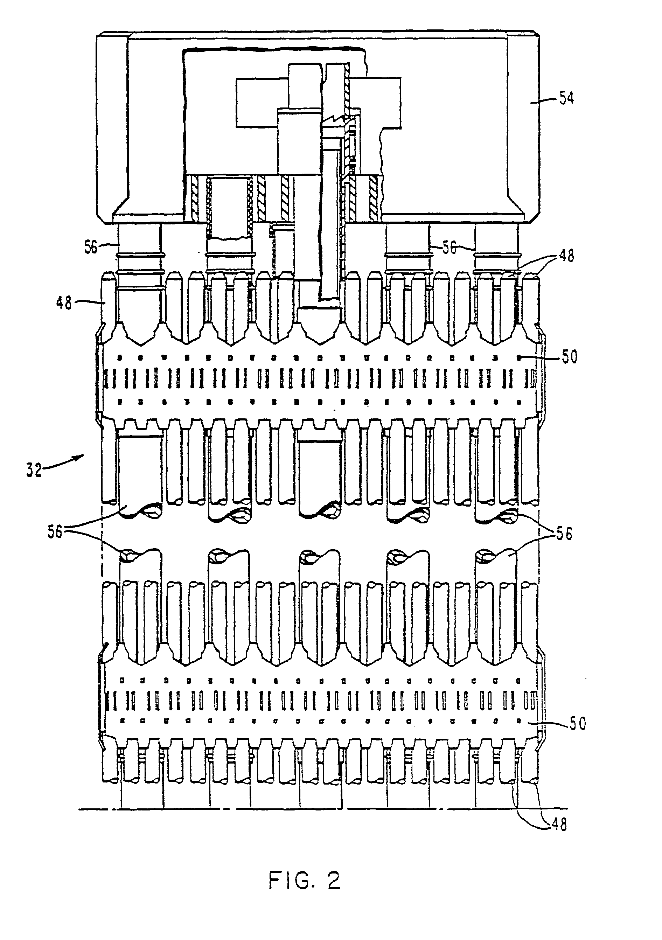

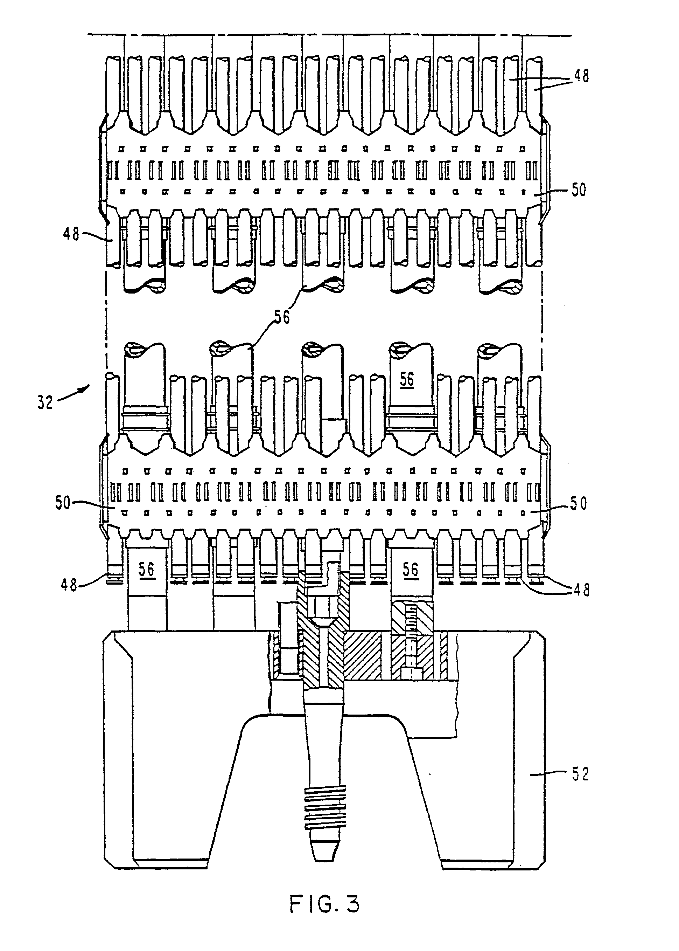

Referring now to Figures 2—4, fuel assemblies 32 comprise fuel elements 48, grids 50, bottom nozzle 52, top nozzle 54, and guide tubes 56. Fuel elements 48 may be elongated cylindrical metallic tubes containing nuclear fuel pellets and having both ends sealed by end plugs. Fuel elements 48 may be arranged in a substantially 20 × 20 rectangular array and are held in place by grids 50. Guide tubes 56 which may number 25 are arranged in a generally 5 × 5 array within each fuel assembly 32. Each guide tube 56 occupies the space of about four fuel elements 48 and extend from bottom nozzle 52 to top nozzle 54 to support grids 50, top nozzle 54 and bottom top nozzle 52. Guide tubes 56 may be hollow cylindrical metallic tubes manufactured from Zircaloy and capable of accommodating rods such and displacer rods 40 or control rods. Displacer rods 40 and control rods are manufactured to be approximately the same size so that each guide tube 56 can equally accommodate either a displacer rod or a control rod. When not occupied by a rod, guide tubes 56 are filled with reactor coolant; however, when displacer rods 40 are inserted in guide tubes 56 displacer rods 40 displace the water therein.

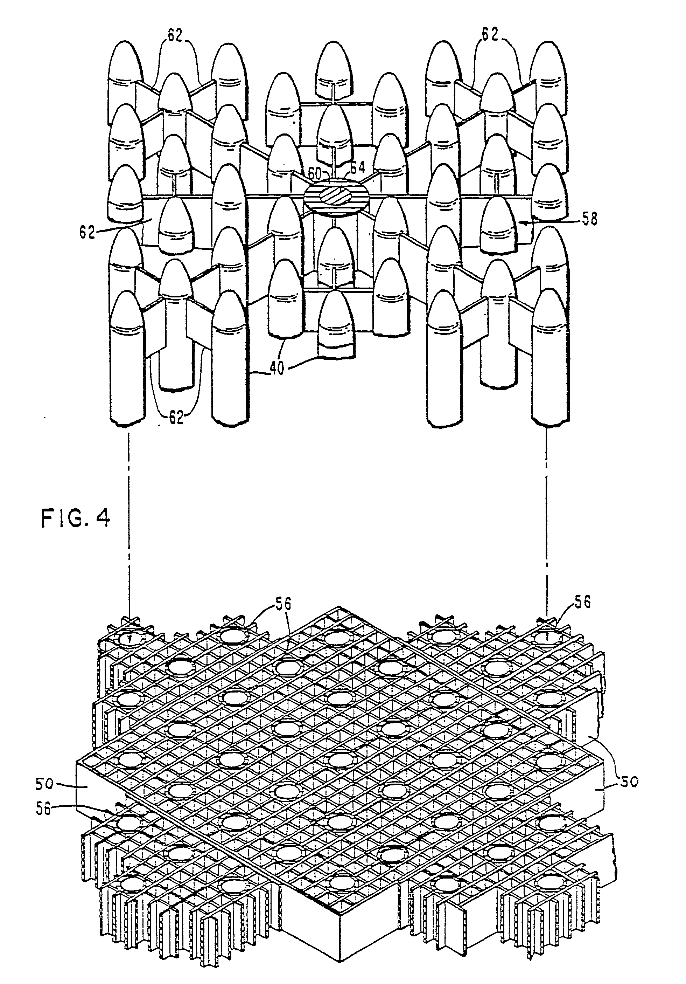

Grids 50 are positioned at various locations along the length of fuel assembly 32 and serve to space fuel elements 48 and guide tubes 56 at appropriate distances from each other and to allow the reactor coolant to circulate in heat transfer relationship with fuel elements 48. A more detailed description of a similar grid may be found in United States Patent Nos. 3,379,617 and 3,379,619, both issued in the name of H. N. Andrews et al. As can be seen in Figure 4, displacer rods 40 are elongated cylindrical substantially hollow rods which consist of Zircaloy. Displacer rods 40 may also contain $ZrO_2$ or $Al_2O_3$ pellets for weighting the rod and enhancing its lowerability. Displacer rods 40 are arranged so as to be in colinear alignment with guide tube 56 so that displacer rods 40 may be inserted in guide tubes 56 when it is desired. Displacer rods 40 are supported from a common attachment known as a spider 58. Spider 58 comprises a body 60 with struts 62 radially extending from body 60. Displacer rods 40 are individually attached to each strut 62 to form an array corresponding to the array of guide tubes 56 into which displacer rods may be inserted. Spider 58 is attached to drive shaft 64 which is connected to displacer rod drive mechanism 38. Activation of the displacer rod drive mechanism 38 causes drive shaft 64 to be either lowered or raised thereby inserting or withdrawing displacer rods 40 from fuel assemblies 32 of core 34.

It is important to note that each spider 58 is arranged to be able to insert displacer rods 40 into more than one fuel assembly 32. For example, as shown in Figure 4, spider 58 is capable of inserting 25 displacer rods in center fuel assembly 32 and 4 displacer rods in each of the adjacent 4 fuel assemblies. In this manner displacer rods 70 can be moved in and out of fuel assemblies 32 without increasing the number of spiders and drive mechanisms.

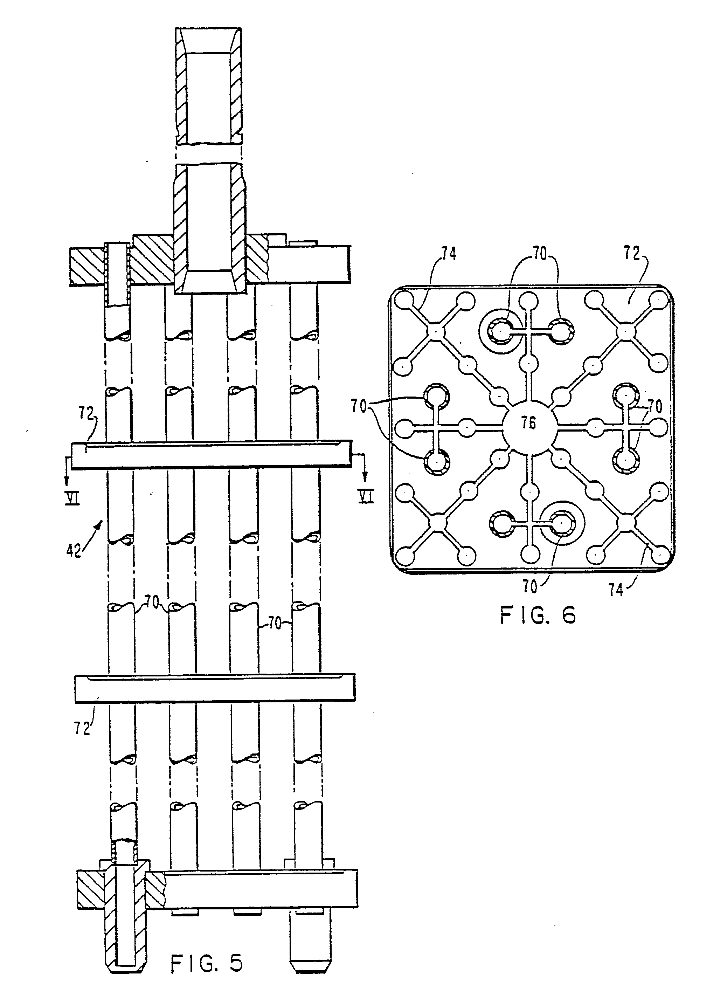

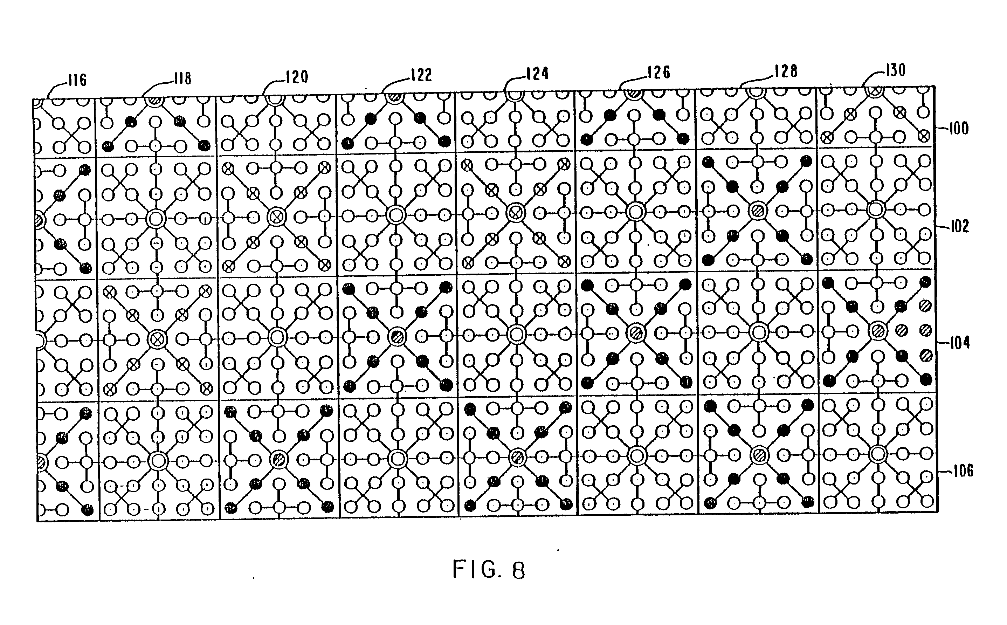

Referring now to Figures 5 and 6, displacer rod guide structures 42 comprise a plurality of split tube guides 70 which are designed to allow rods such as displacer rods or control rods to pass therethrough. Displacer rod guide structures 42 are located between calandria 44 and closure head 24 as shown in Figure 1 and are arranged to correspond to each displacer rod drive mechanism 38. A number of spacers 72 are located at various locations along split tube guides 70 and together with split tube guides 70 serve to guide displacer rods 40 through the upper section of reactor vessel 22. As can be seen in Figure 6, 8 split tube guides 70 may be provided for guiding displacer rods 40. The "split" in split tube guides 70 along with slots 74 in spacers 72 allow spider 58 to pass therethrough while maintaining alignment of the rods with guide tubes 56 in fuel assemblies 32. A center slot 76 is also provided for accommodating drive shaft 64 so that spider 58 may be moved therethrough.

Referring again to Figure 1, calandria 44 which comprises a multiplicity of tubes provides guidance for the rods such as displacer rods 40 through the calandria area. In general, the tubes in calandria 44 are not split tubes, as are split tube guides 70, so that spider 58 stops its descent when spider 58 nears the top of the tubes in calandria 44. When stopped at the top of calandria 44 all rods extend through the calandria tubes and are fully inserted in fuel assembly 32. While inserted in the calandria tubes, the rods are protected from the flow of reactor coolant thereby minimizing vibrations that would otherwise be induced by the high velocity of the reactor coolant in that area.

In the invention as described herein, at least three different types of rods are capable of being inserted into guide tubes 56. For example, displacer rods, control rods, and gray rods may be arranged to be inserted in guide tubes 56. All of the rods are approximately the same size and configuration, but the materials of which they consist are different since they serve different purposes. Displacer rods 40 which may be either a hollow thick walled tube or may contain a low neutron absorbing material such as $ZrO_2$ or $Al_2O_3$ pellets are used to displace reactor coolant and thereby control reactor moderation. Control rods contain neutron absorbing material as is well understood in the art and serve to control core reactivity in a commonly understood fashion. Gray rods are similar to displacer rods 40 but are made of an intermediate neutron absorbing material such as stainless steel so that their reactivity worth is greater than that of displacer rods 40.

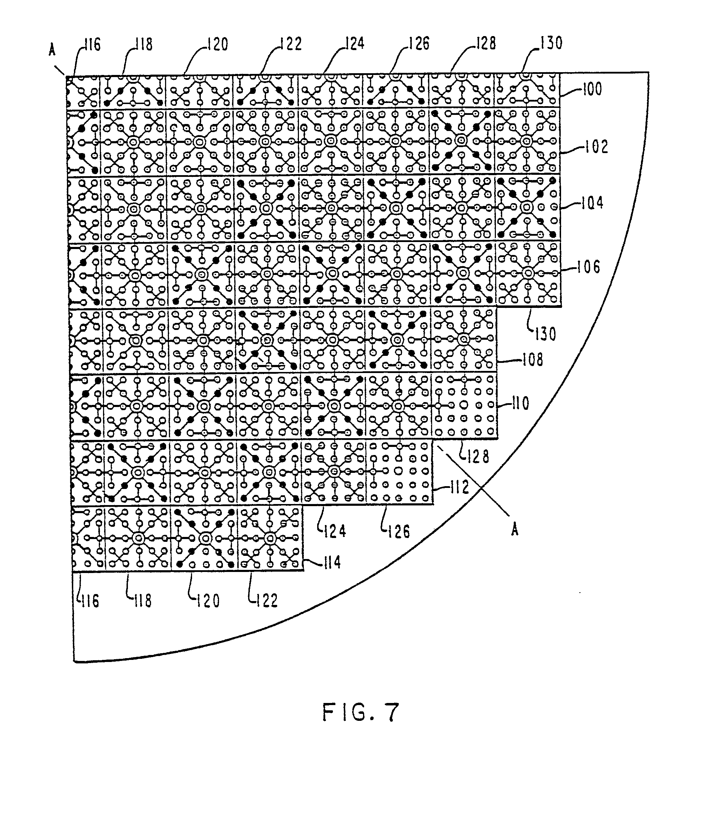

Referring now to Figures 7—11, the quarter core arrangement of fuel elements 48, displacer rods 40, control rods 80, gray rods 82, and unrodded locations 84 are shown. It is to be understood that the full reactor core configuration can be established by extrapolating the quarter core shown in Figure 7. Actually, the quarter core shown in Figure 7 is a mirror image of the eighth core taken along line A—A of Figure 7. However, the quarter core of Figure 7 is being shown for clarity.

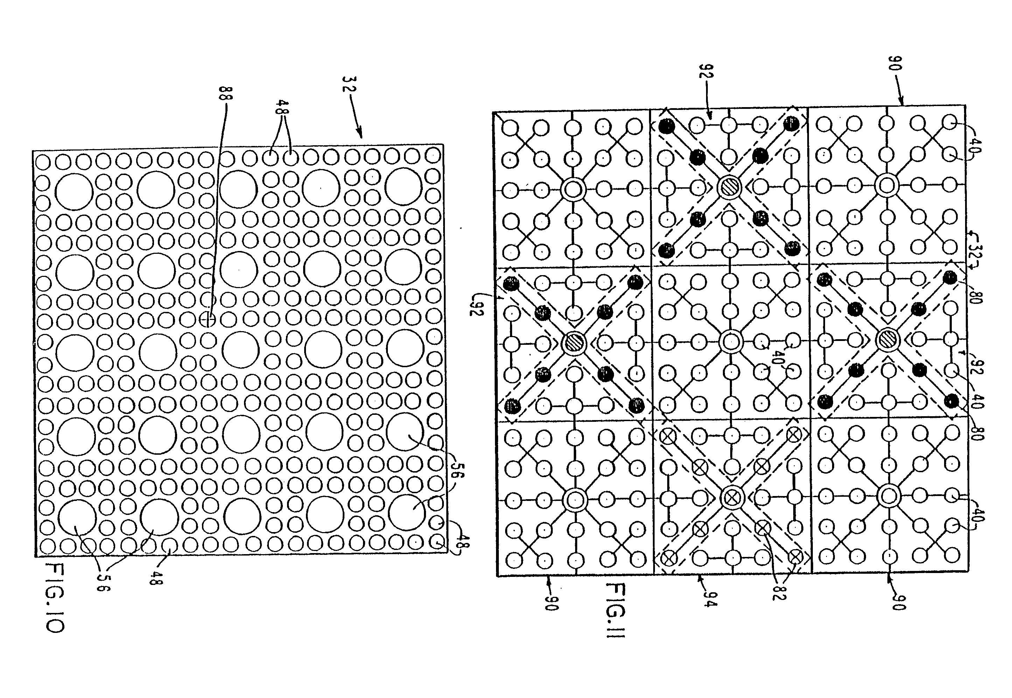

As can be seen in Figure 10, each fuel assembly 32 comprises an array of fuel elements 48 and an array of guide tubes 56. Generally, control rods 38 and gray rods 82 are used only in the diagonally arranged guide tubes 56 while displacer rods 40 are generally used in all guide tubes 56 of a given fuel assembly. In addition, an instrument tube 88 is provided near the centre of each fuel assembly 32 for accommodating data instrumentation such as movable fission chambers. While each fuel assembly 32 is essentially identical to the one shown in Figure 10, each fuel assembly 32 can produce a different function depending on whether guide tubes 56 are occupied by reactor coolant, displacer rods 40, control rods 80, or gray rods 82. Displacer rods 40 and gray rods 82 are generally chosen to be approximately the same size so as to displace approximately the same volume of water. However, gray rods 82 can be thick walled stainless steel cylindrical rods which can have higher reactivity worth per rod than do displacer rods 40 so that they may be used to offset the effects of Xenon transients during load follow operations in addition to moderator displacement.

Referring now to Figure 11, a fuel assembly 32 in which no control rods 80 or gray rods 82 are used and in which only displacer rods 40 are used in guide tubes 56 is referred to generally as displacer assembly 90. A fuel assembly 32 in which both displacer rods 40 and control rods 80 are employed (but no gray rods) is referred to as control assembly 92. Similarly, a fuel assembly 32 in which both displacer rods 40 and gray rods 82 are used is called a gray assembly 94. It should be noted that in Figure 11 fuel elements 48 have been omitted for clarity and that those fuel assemblies are similar to those shown in Figure 10.

Still referring to Figure 11, each of the control rods 80 are gray rods 82 are attached to a spider (not shown) similar to spider 58 except that a spider for control rods 80 or gray rods 82 is associated only with one fuel assembly. In this manner, all control rods 80 or gray rods 82 in a given fuel assembly can be raised or lowered by a single drive mechanism. Furthermore, since each displacer rod spider 58 can extend into the adjacent fuel assemblies (as illustrated in the center portion of Figure 11 and in Figure 4), the displacer rod spider's 58 movement effects the control of five fuel assemblies and reduces the number of displacer rod drive mechanisms needed. Of course, on the periphery of the quarter core (as shown in Figure 7) the particular spider may move less than the usual number of rods because there are no adjacent fuel assemblies or there are unrodded locations 84.

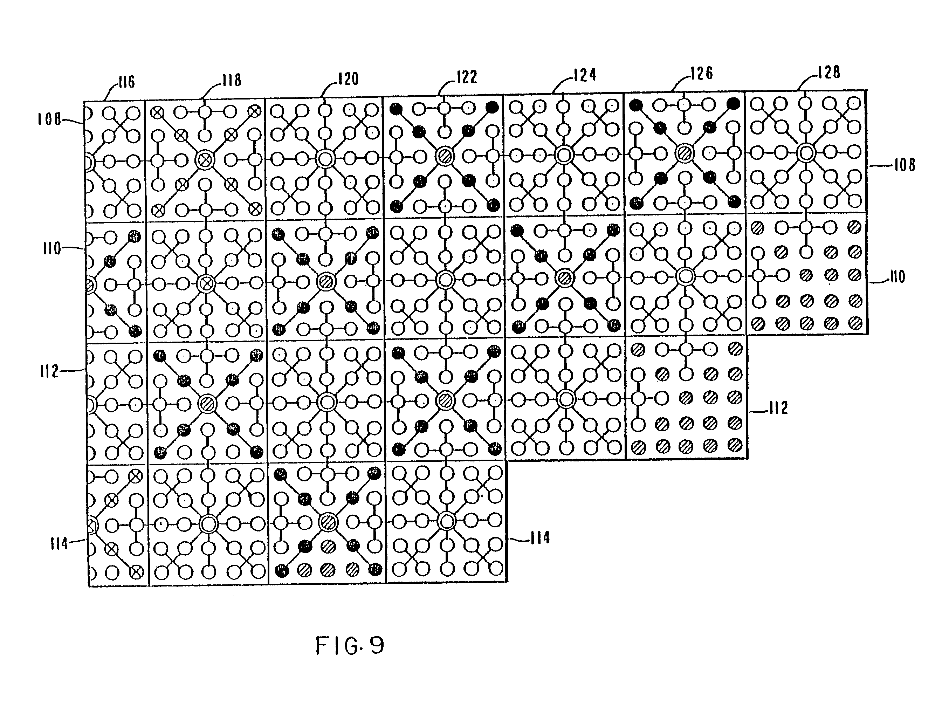

Referring again to Figures 8 and 9 which comprise Figure 7, a quarter core arrangement. Each row or partial row is numbered 100—114 and each column or partial column is numbered 116—130 and comprises:

Fuel Assembly

| | |
|---|---|
| (100,116) | quarter displacer assembly |
| (100,118) | half control assembly |
| (100,120) | half displacer assembly |
| (100,122) | half control assembly |
| (100,124) | half displacer assembly |
| (100,126) | half control assembly |
| (100,128) | half displacer assembly |
| (100,130) | half gray assembly |
| | |
| (100,116) | half control assembly |
| (102,118) | full displacer assembly |
| (102,120) | full gray assembly |
| (102,122) | full displacer assembly |
| (102,124) | full gray assembly |
| (102,126) | full displacer assembly |
| (102,128) | full control assembly |
| (102,130) | full displacer assembly |
| | |
| (104,116) | half displacer assembly |
| (104,118) | full gray assembly |
| (104,120) | full displacer assembly |
| (104,122) | full control assembly |
| (104,124) | full displacer assembly |
| (104,126) | full control assembly |
| (104,128) | full displacer assembly |
| (104,130) | partial control-unrodded assembly |
| | |
| (106,116) | half control assembly |
| (106,118) | full displacer assembly |
| (106,120) | full control assembly |
| (106,122) | full displacer assembly |
| (106,124) | full control assembly |
| (106,126) | full displacer assembly |
| (106,128) | full control assembly |
| (106,130) | full displacer assembly |
| | |
| (108,116) | half displacer assembly |
| (108,118) | full gray assembly |
| (108,120) | full displacer assembly |
| (108,122) | full control assembly |
| (108,124) | full displacer assembly |
| (108,126) | full control assembly |
| (108,128) | full displacer assembly |
| | |
| (110,116) | half control assembly |
| (110,118) | full displacer assembly |
| (110,120) | full control assembly |
| (110,122) | full displacer assembly |
| (110,124) | full control assembly |
| (110,126) | full displacer assembly |
| (110,128) | partial displacer unrodded assembly |
| | |
| (112,116) | half displacer assembly |
| (112,118) | full control assembly |
| (112,120) | full displacer assembly |
| (112,122) | full control assembly |
| (112,124) | full displacer assembly |
| (112,126) | partial displacer unrodded assembly |
| | |
| (114,116) | half gray assembly |
| (114,118) | full displacer assembly |
| (114,120) | partial control unrodded assembly |

As can be seen from the above description of the quarter core, the core configuration based on this concept can be illustrated generally as shown in Figure 11. Basically, the fuel assembly in the center of the full core as represented by fuel assembly (100, 116) in Figure 7 can be chosen to be either a control assembly 92 or preferably a displacer assembly 90. Once this is chosen, the four fuel assemblies immediately adjacent to the flat sides of the center fuel assembly are chosen to be the other type and the fuel assemblies on the diagonal are chosen to be the same type as the center assembly. This pattern is then continued in an alternating fashion. For example, the center fuel assembly (100, 116) in Figure 7 was chosen to be a displacer assembly 90 so that the fuel assemblies on its adjacent flat sides are chosen to be either control assemblies 92 or gray assemblies 94 while those on the diagonal are chosen to be displacer assemblies 90. This pattern is repeated in alternating fashion until the periphery of the core is reached where the end fuel assemblies may be chosen to be hybrid assemblies based on the nuclear physics of the particular core. Whether a particular assembly is chosen to be a control assembly 92 or a gray assembly 94 is determined by first selecting the number and location of control assemblies needed based on conventional core design. The remainder of the assemblies not chosen to be control assemblies 92 are then used as gray assemblies 94. Thus, substantially the entire core can be arranged on an alternating pattern of displacer assemblies and control or gray assemblies with practically all the fuel assemblies being served by at least one displacer rod spider 58 and with each displacer rod spider 58 serving generally 5 fuel assemblies. Moreover, each fuel assembly is served by at least one drive mechanism for either displacer rods, control rods or gray rods.

The illustrated core arrangement provides a means by which the neutron spectrum can be controlled in a "spectral shift" fashion by controlling the moderator volume in the core. This can be accomplished by displacing and replacing the water coolant in the core at appropriate times thereby changing the moderation of the core. In the present invention, displacer rods 40 and gray rods 82 can be used to effect this moderation change.

In operation, all displacer rods 40 and gray rods 82 are inserted in core 34 at the beginning of the core life. However, none of the control rods 80 need be inserted at that time. The insertion of displacer rods 40 and gray rod 82 may be done by activating the appropriate drive mechanism such as displacer rod drive mechanism 38. When the drive mechanism is activated, displacer rods 40 and gray rods 82 fall into the appropriate guide tubes 56 in fuel assemblies 32. The displacer rods and gray rods will displace their volume of coolant (water) thus reducing the volume of moderator in core 34. The reduction of moderator hardens the neutron spectrum of the core and increases plutonium production. This hardening of the neutron spectrum is generally referred to as "spectral shift". The harder neutron spectrum reduces boron chemical shim requirements, results in a more negative moderator temperature coefficient, and reduces or eliminates burnable poison requirements. As the uranium fuel in the core is depleted over the life of the core, a certain number of displacer rods 40 and/or gray rods 82 may be withdrawn from the core by activating their respective drive mechanisms. The withdrawal of the rods allows more water-moderator into the core region and increases moderation of the core. This, in effect, introduces reactivity worth at a time when fuel depletion is causing a reactivity worth depletion. Thus, the reactivity of the core can be maintained at appropriate levels for a longer time. The withdrawal of the rods can continue at a selective rate (depending on core conditions) until, near the end of core life, all displacer rods 40 and all gray rods 82 have been withdrawn from the core. The selection and manipulation of the displacer rods can be chosen in the manner disclosed in copending United States Patent Application Serial No. 217,054 filed herewith.

The displacer rods can be used at start-up to displace approximately 20% of the core water volume and can remain inserted until the boron shim concentration nears zero ppm which is approximately 60% into the fuel cycle. The use of displacer rods in this manner can result in approximately 10% reduction in uranium fuel requirements for a given core life which results in an 10% fuel cost savings. In addition, the use of burnable poison rods can be effectively eliminated, a further cost reduction.

## Claims

1. A spectral shift pressurized water nuclear reactor including a reactor vessel (22) having an inlet (26) and an outlet (28) for circulating a water coolant therethrough and having a closure head (24) disposed on top thereof, and a nuclear core (34) enclosed therein, said core comprising fuel assemblies (32), having a plurality of water displacer elements (40) slidably disposed therein, drive means (38) mounted on said closure head (24) and connected to said displacer elements (40), and guide means (42) disposed in said reactor vessel (22) above said fuel assemblies (32) for receiving and guiding said displacer elements (40) through the upper portion of said reactor vessel (22) said displacer elements being attached to a spider (58) for moving said displacer elements (40) simultaneously, and a drive shaft (64) attached to said spider and extending through said closure head (24), and connected to said drive means (38) for inserting and withdrawing said displacer elements (40) from said fuel assemblies (32), and comprising the combination of

(1) chemical shim capabilities,
(2) a plurality of high neutron absorbing control rods (82) arranged to be inserted into, or withdrawn from, the reactor core (34) for load follow and reactor core power distribution; and

(3) said water displacer elements (40) being arranged to be inserted into or withdrawn from the core (34) for controlling the amount of water in said core (34), the combined volume of said displacer elements (40) being substantially larger than the combined volume of said neutron absorbing control rods (82) so as to generate a substantially larger shift to a fast neutron spectrum by insertion into the core (34) of said water displaced elements than is generated by the insertion of said control rods (82).

2. A nuclear reactor according to claim 1, characterized in that said guide means (42) include a plurality of split tube guides (70) disposed in said reactor vessel (22) above said fuel assemblies (32) and capable of receiving said displacer elements (40) for guiding said displacer elements (40) into said tubes (56), and a plurality of spacers (72) attached to said split tube guides (70) for supporting and spacing said split tube guides (70) and that said spider has portions extending into said split tube guides (70) and engaging the displacer elements (40) therein.

3. A nuclear reactor according to claim 2 characterized in that a plurality of tubes (44) are disposed between, and in alignment with, said guide means (42) and said fuel assemblies (32) for guiding said displacer elements (40) from said guide means (42) and into said fuel assemblies (32) while preventing flow induced vibrations in said displacer elements (40).

4. A nuclear reactor according to claims 1, 2 or 3, characterized in that said displacer elements (40) are hollow cylindrical rods containing $Al_2O_3$ pellets.

## Patentansprüche

1. Mit Spektralverschiebung gesteuerter Druckwasserreaktor, mit einem Reaktorbehälter (22), der einen Einlaß (26) und einen Auslaß (28) zum Hindurchzirkulieren von Kühlwasser sowie an seinem oberen ende Einen Verschlußdeckel (24) aufweist, und mit einem darin befindlichen Reaktorkern (34), der Brennelement (32) enthält, in welchen eine Vielzahl von Wasserverdrängerkörpern (40) verschiebbar angeordnet ist, weiter mit auf dem Verschlußdeckel (24) montierten und mit den Verdrängerkörpern (40) verbundenen Antriebsmitteln (38) und über den Brennelementen (32) im Reaktorbehälter (22) angeordneten Führungsmitteln (42) zur Aufnahme und Führung der Verdrängerkörper (40) durch den oberen Teil des Reaktorbehälters (22), wobei die Verdrängerkörper an einem Stern (58) zur gleichzeitigen Verschiebung der Verdrängerkörper (40) befestigt sind und eine an dem Stern befestigte Antriebsstange (64) durch den Verschlußdeckel (24) hindurchverläuft und mit den Antriebsmitteln (38) verbunden ist, um die Verdrängerkörper (40) in die Brennelemente (32) einzuschieben und aus diesen herauszuziehen, und mit der Kombination von

(1) chemischer Steuerbarkeit,

(2) einer Anzahl von stark neutronenabsorbierenden Steuerstäben (82), die zur Lastfolgesteuerung und Reaktorkern-Leistungsverteilungssteuerung in den Reaktorkern (34) einschliebbar bzw. aus diesem herausziehbar sind, und

(3) einer zolchen Anordnung der Wasserverdrängerkörper (40), daß sie zur Steuerung der Wassermenge im Reaktorkern (34) in diesen einschiebbar bzw. aus diesem herausziehbar sind, wobei das Gesamtvolumen der Verdrängerkörper (40) wesentlich größer als das Gesamtvolumen der neutronenabsorbieren Steuerstäbe (82) ist, so daß durch Einschieben der Wasserverdrängerkörper in den Reaktorkern (34) eine wesentlich größere Verschiebung zu einem schnellen Neutronenspektrum als durch Einschieben der Steuerstäbe (82) erzeugt wird.

2. Reaktor nach Anspruch 1, dadurch gekennzeichnet, daß die Führungsmittel (42) eine Vielzahl von geschlitzten Führungsrohren (70), die oberhalb der Brennelemente (32) im Reaktorbehälter (22) angeordnet sind und die Verdrängerkörper (40) aufnehmen, um die Verdrängerkörper (40) in ihre Rohre (56) einzuführen, und eine Vielzahl von an den geschlitzten Führungsrohren (70) befestigten Abstandshaltern (72) zur Halterung der geschlitzten Führungsrohre (70) mit gegenseitigem Abstand aufweisen, und daß der Stern in die geschlitzten Führungsrohre (70) hineinragende und an den Verdrängerkörpern (40) angreifende Teile aufweist.

3. Reaktor nach Anspruch 2, dadurch gekennzeichnet, daß zwischen den Führungsmitteln (42) und den Brennelementen (32) eine Vielzahl von damit fluchtenden Rohren (44) angeordnet ist, um die Verdrängerkörper (40) aus den Führungsmitteln (42) in die Brennelemente (32) einzuführen und gleichzeitig strömungsinduzierte Vibrationen in den Verdrängerkörpern (40) zu verhindern.

4. Reaktor nach Anspruch 1, 2 oder 3, dadurch gekennzeichnet, daß die Verdrängerkörper (40) hohlzylindrische Stäbe sind, die $Al_2O_3$-Tabletten enthalten.

## Revendications

1. Réacteur nucléaire à eau sous pression et à dérive spectrale, comprenant une cuve (22) de réacteur avec une entrée (26) et une sortie (28) pour la circulation de l'eau de refroidissement et comportant à sa partie supérieure une tête (24) de fermeture, et un coeur nucléaire (34) enfermé dans la cuve, ce coeur comprenant des assemblages combustibles (32), plusieurs éléments (40) de déplacement de l'eau étant montés de manière à pouvoir coulisser à l'intérieur, des moyens (38) d'entraînement montés sur la tête (24) de fermeture et reliés aux éléments (40) de déplacement, des moyens (42) de guidage placés dans la cuve (22) du réacteur au-dessus des assemblages combustibles (32) afin de recevoir et guider ces éléments (40) de déplacement dans la partie supérieure de la cuve (22) du réacteur, ces éléments de déplacement étant attachés à un croisillon (58) pour permettre le déplacement simultané de ces éléments de déplacement, et un arbre d'entraînement (64) fixé au croisillon susdit et s'étendant à travers la tête de fermeture (24), et connecté aux moyens d'entraînement (38) pour l'introduction des éléments de déplacement (40) dans les assemblages combustibles (32) et pour leur retrait hors de ceux-ci, et comprenant la combinaison de:

(1) des capacités de compensation chimiques;

(2) une série de barres de commande (82) à forte absorption des neutrons, agencées pour être introduites dans le coeur du réacteur et être retirées de ce coeur pour le suivi de charge et la distribution de puissance dans le coeur de réacteur; et

(3) les éléments susdits de déplacement d'eau (40) étant agencés pour pouvoir être introduits dans le coeur (34) ou être retirés de celui-ci en vue du réglage de la quantité d'eau dans ce coeur (34), le volume combiné de ces éléments de déplacement (40) étant sensiblement plus grand que le volume combiné des barres de commande (82) absorbant les neutrons, de manière à créer une dérive sensiblement plus grande vers un spectre de neutrons rapides par introduction, dans le coeur (34), de ces éléments de déplacement d'eau, que celle créée par l'introduction des barres de commande (82) susdites.

2. Réacteur nucléaire suivant la revendication 1, caractérisé en ce que les moyens (42) de guidage comprennant plusieurs guides tubulaires fendus (70) placés dans la cuve (22) du réacteur au-dessus des assemblages combustibles (32) et capables de recevoir les éléments (40) de déplacement afin de guider ces derniers dans les tubes (56), et plusieurs plaques (72) d'écartement fixées aux guides tubulaires fendus (70) afin de supporter et maintenir écartés ces guides tubulaires fendus (70), et en ce que le croisillon comporte des parties s'étendant dans ces guides tubulaires fendus (70) et coopérant avec les éléments de déplacement (40) qui s'y trouvent.

3. Réacteur nucléaire suivant la revendication 2, caractérisé en ce que plusieurs tubes (44) sont disposés entre les moyens (42) de guidage et les assemblages combustibles (32) et sont alignés avec eux, afin de guider les éléments (40) de déplacement à partir des moyens (42) de guidage et jusque dans les assemblages combustibles (32), tout en empêchant les vibrations provoquées par l'écoulement dans les éléments (40) de déplacement susdits.

4. Réacteur nucléaire suivant l'une quelconque des revendications 1, 2 ou 3, caractérisé en ce que les éléments (40) de déplacement des barres cylindriques creuses contenant des pastilles d'$Al_2O_3$.

FIG. I

FIG. 2

FIG. 3

FIG. 4

FIG. 5

FIG. 6

FIG. 7

FIG. 8

100  102  104  106

116  118  120  122  124  126  128  130

FIG. 9

FIG.11

FIG.10